# EUROPÄISCHE PATENTANMELDUNG

(11) **EP 2 045 472 A1**
(43) Veröffentlichungstag der Anmeldung: **08.04.2009**
(21) Anmeldenummer: 07019552.4
(22) Anmeldetag: 05.10.2007
(51) Int. Cl.: F04D 29/64, B23P 19/02, F01D 25/28

(54) **Verfahren zur Montage grosser Turbomaschinen und Vorrichtung zur Durchführung desselben**

(71) Anmelder: Siemens Aktiengesellschaft, 80333 München (DE)
(72) Erfinder: Huth, Sebastian, 41068 Mönchengladbach (DE); Nass, Dieter, 47447 Moers (DE); Schedlinski, Werner, 47228 Duisburg (DE); Schulte, Monika, 44799 Bochum (DE); Zacharias, Wolfgang, 47198 Duisburg (DE)

(57) **Zusammenfassung**

Die Erfindung betrifft ein Verfahren zur Montage einer Turbomaschine, insbesondere eines Topfverdichters, bei dem ein Bündel (2) der Turbomaschine koaxial in ein Außengehäuse (1) eingeführt wird und bei dem eine an dem Außengehäuse (1) festgesetzte Montagevorrichtung verwendet wird, auf welcher sich das Bündel (2) während der Montage zumindest zeitweilig abstützt. Ihr liegt die Aufgabe zugrunde, ein Montageverfahren anzugeben, nach welchem besonders große und besonders schwere Bündel in das Außengehäuse eingeführt werden können, ohne besondere konstruktive Maßnahmen am Außengehäuse ergreifen zu müssen. Eine zweite Zielsetzung der Erfindung liegt darin, die Montage selbst bei beengten Platzverhältnissen zu gestatten. Gelöst wird diese Aufgabe dadurch, dass das Bündel (2) an seiner in Einführrichtung gewandten Stirnseite mit einer Verlängerung (5) versehen wird, welche sich unmittelbar vor Einführen des Bündels (2) längs durch das Außengehäuse (1) hindurch erstreckt und in einem Lager (19) aufliegt, welches an der der Montagevorrichtung abgewandten Stirnseite des Außengehäuses (1) angeordnet und an dem Außengehäuse (1) festgesetzt ist, wobei die Verlängerung (5) aus einer Mehrzahl von hintereinander aufgereihten und in Stoßstellen aneinander lösbar befestigten Sektionen (6) gebildet wird, wobei das Bündel (2) durch eine Mehrzahl von aufeinander folgenden, von der Montagevorrichtung ausgeübten Hüben in das Außengehäuse (1) schrittweise eingeführt wird, und wobei die Verlängerung (5) sukzessive vom Bündel (2) abgebaut wird, indem ihre außerhalb des Lagers (19) liegenden Stoßstellen nacheinander getrennt und die abgetrennten Sektionen (6) entfernt werden.

## Beschreibung

Die Erfindung betrifft ein Verfahren zur Montage einer Turbomaschine, insbesondere eines Topfverdichters, bei dem ein Bündel Bauteile der Turbomaschine koaxial in ein Außengehäuse der Turbomaschine eingeführt wird und bei dem eine an dem Außengehäuse festgesetzte Montagevorrichtung verwendet wird, auf welcher sich das Bündel während der Montage zumindest zeitweilig abstützt. Darüber hinaus betrifft die Erfindung eine Montagevorrichtung zur Durchführung des Verfahrens.

Ein Verfahren derselben Gattung ist bekannt aus der Offenlegungsschrift DE 199 19 650 Al.

Turbomaschinen umfassen einerseits stehende, andererseits rotierende Bauteile. Im Grenzbereich dieser Bauteilgruppen, also an den Dicht- und Lagerstellen sind enge Tolleranzen einzuhalten, um gute Laufeigenschaften bzw. eine gute Abdichtung zu erzielen. Die Qualität der Abdichtung beeinflusst den Wirkungsgrad der Maschine erheblich. Mit wachsender Maschinengröße wird die Montage der tolerierten Bauteile zum Problem: Es gilt dabei, Bauteile mit einem Gewicht von mehreren Tonnen und Längen von mehreren Metern mit der Genauigkeit von Zehntelmillimetern zueinander auszurichten und zu fügen. Um die Montagearbeit am Aufstellungsort der Maschine zu verkürzen, ist es üblich, rotierende und stehende Bauteile zu einem Bündel zusammen zu fassen und dieses Bündel koaxial in ein stehendes Außengehäuse der Turbomaschine einzusetzen. Die Passungen zwischen den rotierenden und stehenden Teilen befinden sich innerhalb des Bündels, welches am Produktionsort der Turbomaschine vormontiert werden kann. Die Schnittstelle zwischen Außengehäuse und Bündel verläuft somit zwar allein durch stehende Teile, zwischen denen aber dennoch hochgenaue Passungen einzuhalten sind. Bei der Endmontage im Feld sind daher ähnlich hohe Anforderungen an die Genauigkeit zu erfüllen wie bei der Vormontage im Werk. Die Sicherheitsanforderungen sind bei der Feldmontage allerdings größer, da hier weitaus höhere Gewichte zu handhaben sind.

Die DE 199 19 650 A1 beschreibt ein Verfahren zur Montage eines Kompressors. Dabei wird ein Kompressorbündel in das Außengehäuse des Kompressors koaxial eingeführt. Zu diesem Zwecke wird an dem Außengehäuse eine Montagevorrichtung festgesetzt, auf welcher sich das Bündel während der Montage zeitweilig abstützt. Das Kompressorbündel wird mit mehreren Rollen versehen, die auf der Montagevorrichtung abrollen. Um eine Stufe innerhalb des Außengehäuses zu überwinden, ist das Außengehäuse mit einer Mehrzahl von vertikal verfahrbaren Rollen versehen, auf welcher das Kompressorbündel bis zum Erreichen der Stufe gleitet. Danach werden diese Rollen radial eingezogen, so dass das Bündel durchgeschoben werden kann. Nachteilig an diesem Verfahren ist, dass an dem Außengehäuse Ausnehmungen für die vertikal verfahrbaren Rollen konstruktiv vorgesehen werden müssen.

Im Hinblick auf diesen Stand der Technik liegt der vorliegenden Erfindung die Aufgabe zugrunde, ein Verfahren zur Montage einer Turbomaschine anzugeben, nach welchem besonders große und besonders schwere Bündel in das Außengehäuse eingeführt werden können, ohne besondere konstruktive Maßnahmen am Außengehäuse ergreifen zu müssen. Eine zweite Zielsetzung der Erfindung liegt darin, die Montage selbst bei beengten Platzverhältnissen zu ermöglichen. So werden nämlich Kompressoren häufig in unmittelbarer Nachbarschaft zu ihren Antriebsmaschinen wie Turbinen oder Getriebe aufgestellt, so dass antriebsseitig wenig Platz zum Rangieren des Bündels besteht.

Gelöst werden diese Aufgaben dadurch, dass das Bündel an seiner in Einführrichtung gewandten Stirnseite mit einer Verlängerung versehen wird, welche sich unmittelbar vor Einführen des Bündels durch das Außengehäuse hindurch erstreckt und in einem Lager aufliegt, welches an der der Montagevorrichtung abgewandten Stirnseite des Außengehäuses angeordnet und an dem Außengehäuse festgesetzt ist. Die Verlängerung besteht dabei aus einer Mehrzahl von hintereinander aufgereihten und in Stoßstellen aneinander lösbar befestigten Sektionen. Das Einführen des Bündels in das Außengehäuse wird erfindungsgemäß durch eine Mehrzahl von aufeinander folgenden Hüben bewerkstelligt, welche die Montagevorrichtung auf das Bündel ausübt. Die Verlängerung wird dabei sukzessive vom Bündel abgebaut, indem ihre außerhalb des Lagers liegenden Stoßstellen nacheinander getrennt und die abgetrennten Sektionen entfernt werden.

Eine erste Grundidee des erfindungsgemäßen Verfahrens besteht darin, das Bündel während des Montageprozesses beiderseits des Außengehäuses zu stützen, nämlich am Ursprung des Einführwegs mittels der Montagevorrichtung und am Ziel des Montagewegs mittels eines Lagers. Montagevorrichtung und Lager werden jeweils stirnseitig an dem Außengehäuse festgesetzt und dienen zur Positionierung des Bündels relativ zum Außengehäuse. Um die beiderseitige Abstützung während des gesamten Montagevorgangs aufrecht zu erhalten, wird an dem Bündel in Einführrichtung eine Verlängerung befestigt, die sich durch das Außengehäuse hindurch erstreckt, an der der Montagevorrichtung abgewandten Seite wieder austritt und dort auf dem Lager aufliegt.

Eine zweite Grundidee der Erfindung besteht darin, die Verlängerung zu segmentieren, das Bündel hubweise an das Außengehäuse einzuführen und die an der anderen Seite schrittweise austretende Verlängerung durch Entfernung der nicht mehr tragenden Sektionen abzubauen. Durch diese Maßnahme ist es möglich, besonders lange Bündel selbst dann zu montieren, wenn in Montagerichtung gesehen hinter dem Außengehäuse wenig Raum zur Verfügung steht. Die Länge der Verlängerung muss nämlich prinzipbedingt die Länge des Bündels übersteigen, so dass theoretisch die dreifache Länge des Bündels als Montageweg notwendig wäre. Durch das sektionsweise Abbauen der Verlängerung wird kaum Raum hinter dem Lager benötigt, weswegen der tatsächlich benötigte Montageweg nur etwa der doppelten Bündellänge entspricht.
Die Verlängerung wird vorzugsweise als ein Schachtelhalm ausgeführt, der sich aus mehreren ineinander gesteckten, im Wesentlichen zylinderförmigen Sektionen zusammensetzt und sich koaxial zum Bündel erstreckt. Der hohle Halm kann empfindliche Lagerteile des Bündels während der Montage schützend umschließen.

Vorzugsweise wird das Verfahren so durchgeführt, dass nach jedem Hub eine Stoßstelle getrennt und eine dadurch abgetrennte Sektion entfernt wird. Dies bedeutet, dass der Hubweg etwa der Sektionslänge entspricht. Hierdurch wird besonders viel Raum eingespart.

Der Hub der Montageeinrichtung wird bevorzugt von einer Haupthubeinrichtung bewerkstelligt, die nach jedem erfolgten Hub entgegengesetzt eingefahren wird. Dadurch wird der Gesamthub der Haupthubenrichtung auf eine Hublänge begrenzt, wodurch die Montagevorrichtung kleiner baut. Damit der Rückhub das Bündel nicht wieder herauszieht, wird die Haupthubeinrichtung zuvor von dem Schlitten gelöst.

Das Lager, welches die Verlängerung trägt, wird vorzugsweise dazu benutzt, das Bündel koaxial zum Außengehäuse auszurichten. Hierzu wird die geometrische Position des Lagers vertikal und/oder horizontal variiert. Die Ausrichtung mittels des Lagers ist deshalb vorteilhaft, weil die Passung des Bündels im Außengehäuse am Ende des Einführwegs realisiert ist. Das Lager wird an dem Gehäuse fixiert, um die Montagegenauigkeit zu erhöhen. Sofern das Gehäuse die Lagerlast nicht allein zu tragen vermag, kann es zusätzlich über den Boden abgestützt werden.

Eine Montagevorrichtung, die sich hervorragend zur Durchführung des erfindungsgemäßen Verfahrens eignet, umfasst ein am Außengehäuse festsetzbares Gestell, einen im Gestell linear geführten Schlitten, eine Vorhubeinrichtung zum Verschieben des Schlittens relativ zum Gestell, eine im Schlitten linear geführte, am Bündel festsetzbare Laufkatze, eine Haupthubeinrichtung zum Verschieben der Laufkatze relativ zum Schlitten und schließlich eine am Schlitten angeordnete, vertikal verfahrbare Abstützeinrichtung. Die Montageeinrichtung ist dabei so zu dimensionieren, dass Laufkatze einerseits und Abstützeinrichtung andererseits das Bündel gemeinsam tragen.

Um das vorteilhafte Zurückfahren der Haupthubzylinder nach jedem erfolgten Arbeitshub zu ermöglichen umfasst die Haupthubeinrichtung der Montagevorrichtung mindestens einen Hydraulikzylinder, der mit seinem ersten Ende an der Laufkatze angebunden ist und mit seinem zweiten Ende mit auf dem Schlitten gleitenden Gleitplatten versehen ist. Außerdem entlang des Schlittens eine Mehrzahl von Bohrungen beabstandet zueinander vorzusehen, deren Abstand längs des Schlittens im Wesentlichen dem Hub der Haupthubeinrichtung entspricht. Die Gleitplatten werden dann mittels in die Bohrungen einsteckbarer Stifte an dem Schlitten fixiert. Nach jedem Hub werden die Stifte aus der Bohrung entfernt, sodass die Gleitplatten frei auf dem Schlitten laufen. Sodann wird der Zylinder der Haupthubeinrichtung eingezogen, was ein Nachziehen der Gleitplatten entlang des Schlittens bewirkt. Wenn der Zylinder eingefahren ist, werden die Gleitplatten an dem nächsten Loch fixiert, damit der nächste Hub gefahren werden kann. Die an sich gewichtige Haupthubeinrichtung zieht sich auf diese Weise mit jedem Rückhub selbstständig nach.

Das erfindungsgemäße Verfahren und die zugehörige Montagevorrichtung soll nun anhand eines Ausführungsbeispiels näher erläutert werden.

Hierfür zeigen:
- Fig. 1 - 5:: Verfahrensschritte, schematisch;

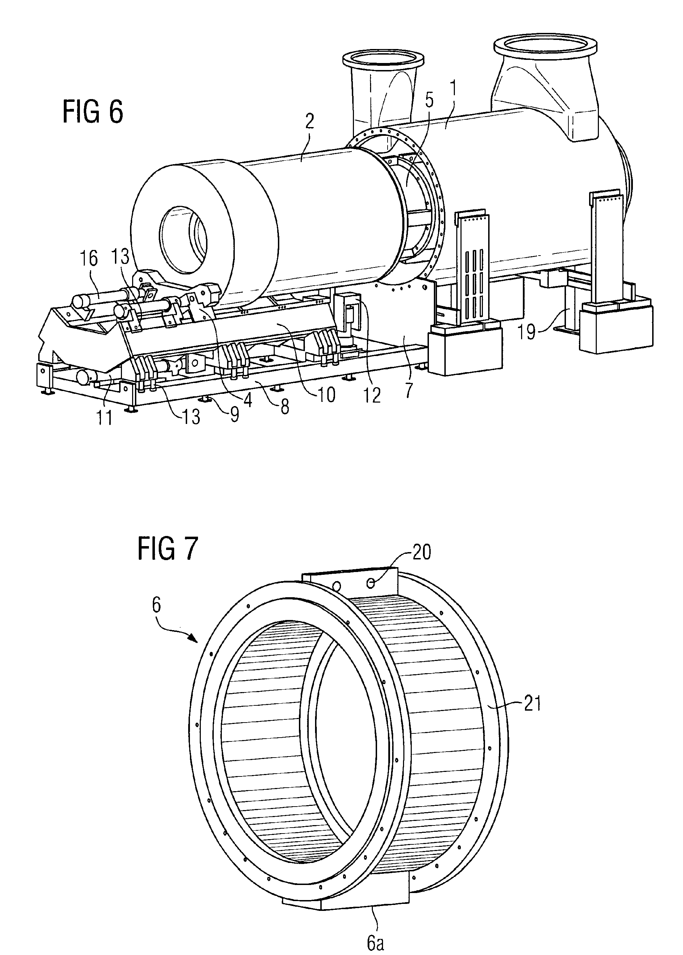

- Fig. 6:: Topfkompressor während der Montage, perspektivisch;
- Fig. 7:: eine Sektion des Schachtelhalms.

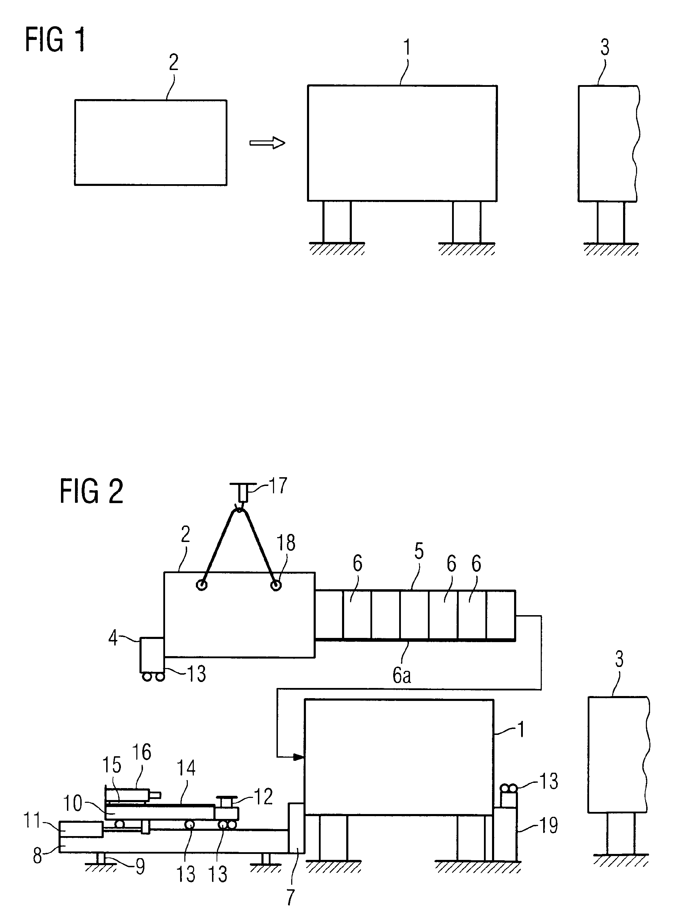

Im Rahmen des erfindungsgemäßen Montageverfahrens gilt es, in das feststehende Außengehäuse 1 eines Topfkompressors ein Bündel 2 koaxial einzuführen (vgl. Fig. 1a). Das erfindungsgemäße Verfahren wurde für die Montage sehr großer Turbomaschinen erdacht, es soll insbesondere dazu taugen, Bündel von etwa 6 m Länge und 3 m Durchmesser bei einem Gewicht von etwa 225 Tonnen in das Außengehäuse 1 einzusetzen. Dabei ist zu beachten, dass am Montageort bereits eine Antriebsmaschine 3 zum Antrieb des Kompressors aufgestellt sein könnte, welcher den Rangierraum einseitig des Außengehäuses 1 stark einschränkt. Das zu montierende Bündel 2 umfasst sowohl rotierende, als auch stehende Teile und wurde am Fertigungsort der Maschine vormontiert. Die erfindungsgemäße Endmontage des Bündels 2 im Außengehäuse 1 erfolgt am Aufstellungsort. Selbstverständlich kann die Erfindung auch im Produktionswerk angewandt werden, wenn die Maschine komplett montiert versandt wird. Immer lässt sich das erfindungsgemäße Verfahren vorteilhaft während späterer Revisionsarbeiten am Aufstellungsort nutzen.

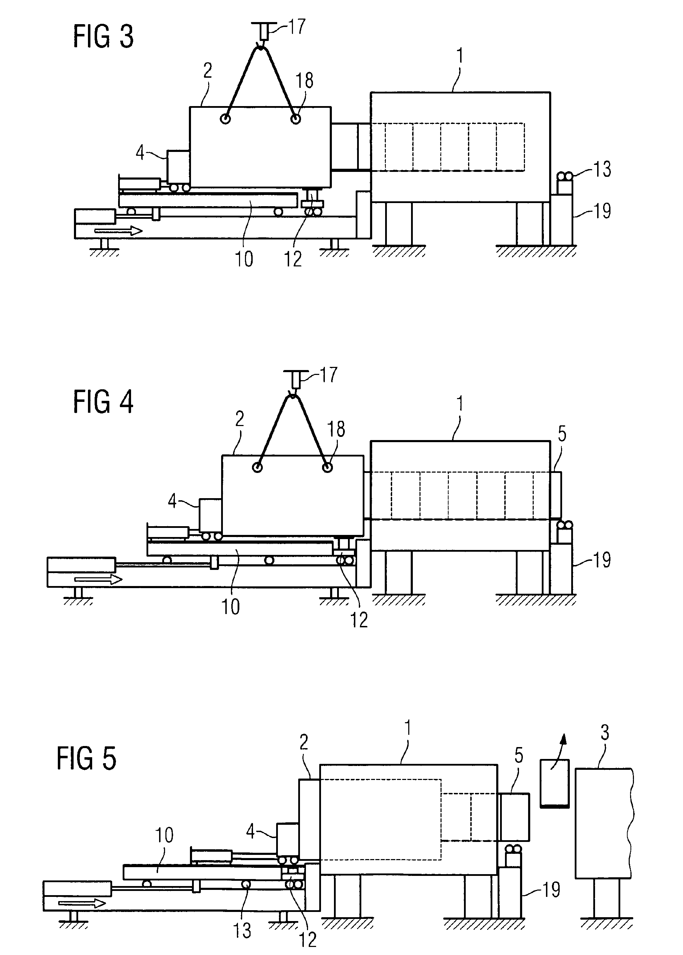

Hierzu wird zunächst eine Laufkatze 4 an der Unterseite des Bündels 2 befestigt (Fig. 1b). Die Laufkatze 4 erstreckt sich lediglich über einen kurzen, außermittigen Abschnitt des Bündels 2, abgewandt von dem Außengehäuse 1. An seiner in Einführrichtung gewandten Stirnseite wird das Bündel 2 mit einer Verlängerung in Gestalt eines Schachtelhalms 5 versehen. Der Schachtelhalm 5 setzt sich aus einer Mehrzahl von ineinander gesteckten, im Wesentlichen zylinderrohrförmigen Sektionen 6 zusammen, die sich koaxial zum Bündel 2 erstrecken. Der zusammengebaute Schachtelhalm 5 ist an dem saugseitigen Deckel des Bündels 2 angeflanscht und umschließt sowohl den Lagerbock, als auch die axialen Flanschanschlüsse der Hilfsverrohrung. Der Schachtelhalm 5 besteht aus insgesamt sieben Sektionen 6, die ineinander gesteckt, verschraubt und verstiftet werden. An der Unterseite jeder Sektion 6 ist eine bearbeitete, beidseitig abgeschrägte Gleitfläche 6a vorgesehen, vgl. auch Figur 3.

Das bereits aufgestellte Außengehäuse 1 ist an seinen Stirnseiten geöffnet. An seiner der Antriebsmaschine 3 abgewandten Stirnseite wird dem Außengehäuse 1 mittels einer Anschlussplatte 7 ein Gestell 8 angeflanscht und verstiftet. Das Gestell 8 bildet die Basis der Montagevorrichtung.
Bei dem Gestell 8 handelt es sich um eine Schienenkonstruktion, die mittels Nivelierspindeln 9 horizontal auf dem Maschinenfundament ausgerichtet wird. Sofern die Schienenlänge und das Gewicht des Bündels 2 zu einer unzulässigen Durchbiegung führen würde, wird die Schienenkonstruktion des Gestells 8 an weiteren Stellen unterstützt.

Weiterer Bestandteil der Montagevorrichtung ist ein Schlitten 10, der auf die Grundschienen des Gestells 8 aufgesetzt wird und somit im Gestell linear geführt ist. Eine Vorhubeinrichtung 11 in Gestalt eines Hydraulikzylinders verbindet Gestell 8 und Schlitten 10, so dass der Schlitten 10 mittels der Vorhubeinrichtung 11 hydraulisch auf dem Gestell linear verfahrbar ist.

Frontal am Schlitten 10 befestigt ist eine vertikal verfahrbare Abstützeinrichtung 12, ebenfalls in Gestalt von Hydraulikzylindern. Sie dienen später der Unterstützung des Bündels 2 und sind wie der Schlitten 10 mittels Wälzwagen 13 auf den Grundschienen des Gestells 8 geführt. In der in Figur 1b gezeigten Ausgangslage sind die Zylinder der Abstützeinrichtung 12 komplett eingezogen.

Auf der Oberseite des Schlittens 10 sind seinerseits wieder Gleitschienen 14 angebracht, die sich unter einem Neigungswinkel von 30° zueinander parallel zur Fügungsrichtung des Schlittens 10 auf dem Gestell 8 erstrecken. Alternativ kann auch eine einzige 0°-Gleitschine verwendet werden. Auf den Gleitschienen 14 des Schlittens 10 geführt sind Gleitplatten 15, auf denen Hydraulikzylinder einer Haupthubeinrichtung 16 befestigt sind. Die Gleitplatten 15 werden jeweils mit Hilfe zweier Kegelstifte an der Gleitschiene 14 fixiert. Dazu wird der eine Kegelstift senkrecht von oben durch die Gleitplatte 15 gesteckt und ein zweiter im vorderen Bereich der Gleitplatte 15 seitlich eingeschoben. In der Gleitschiene 14 sind dafür entsprechende Bohrungen zur Aufnahme der Kegelstifte vorhanden. Die Bohrungen sind entlang der Gleitschienen 14 äquidistant zueinander angeordnet, damit die Haupthubeinrichtung 16 an unterschiedlichen Orten entlang des Schlittens 10 fixierbar ist. Der Bohrungsabstand längs des Schlittens entspricht dem Hub der Haupthubeinrichtung.

Nun kann das Bündel 2 zusammen mit der vormontierten Laufkatze 4 und dem Schachtelhalm 5 auf den Schlitten 10 aufgesetzt werden. Der hierzu verwendete Kran 17 schwenkt das Bündel 2 soweit in das Außengehäuse 1 ein, bis der vordere Anschlagspunkt 18 einen minimalen Abstand zum Gehäuse 1 erreicht hat.

Die Laufkatze 4 ist an ihrer Unterseite ebenfalls mit Wälzwagen 13 versehen, passend zu den Gleitschienen 14 an der Oberseite des Schlittens 10. Im aufgesetzten Zustand (Fig. 1c) ruht das Bündel 2 einerseits auf der Laufkatze 4 und wird andererseits von der Abstützeinrichtung 12 gestützt, deren Hydraulikzylinder dafür in die entsprechende Höhe verfahren sind. Die Last des Bündels 2 ruht somit einerseits über Laufkatze 4 und Schlitten 10, und andererseits über die Abstützeinrichtung 12 auf dem Gestell 8. Die Laufkatze 4 wird mit den Gelenkaugen der Hydraulikzylinder der Haupthubeinrichtung 16 verbunden, um ein Verschieben des Bündels 2 relativ zum Schlitten 10 zu ermöglichen.

Nun fährt die Vorhubeinrichtung 11 den Schlitten 10 bis an das Außengehäuse 1 heran. Der Schachtelhalm 5 tritt dabei an der der Antriebsmaschine 3 zugewandten Stirnseite aus dem Gehäuse 1 heraus und wird dort an einem an dem Außengehäuse 1 befestigten Lager 19 abgestützt. Hierzu umfasst das Lager 19 einen auf zwei Nivelierspindeln gelagerten Wälzwagen 13 mit seitlichen Führungsrollen, welche die Gleitflächen 6a an der Unterseite des Schachtelhalms 5 umschließen. Die Abstützvorrichtung 12 fährt nun in ihre Nulllage zurück, so dass der Verband aus Bündel 2 und Schachtelhalm 5 fortan beiderseits des Außengehäuses 1 abgestützt ist, nämlich einerseits auf der Laufkatze 4, und andererseits auf dem Lager 19 (vgl. Fig. 1d).

Das Bündel 2 wird nun schrittweise durch die Haupthubvorrichtung 16 in das Außengehäuse 1 eingefahren. Dabei wird der Zylinderhubweg von etwa 1,2 m der Zylinder der Haupthubeinrichtung 16 ausgenutzt. Die Laufkatze 4 wandert damit 1,20 m auf dem Schlitten 10 in Richtung des Gehäuses, das Innenbündel 2 um diesen Betrag in das Gehäuse 1 hinein. Auf der der Montagevorrichtung abgewandten Seite tritt der Schachtelhalm 5 um diesen Betrag aus. Aufgrund der Sektionslänge von einem Meter wird der Kontakt zwischen Schachtelhalm 5 und Lager 19 von der äußersten Sektion 6 zur nächst inneren Sektion übergeben.

Die äußerste Sektion 6 ist nun lastfrei und kann an ihrer Stoßstelle von der tragenden Sektion abgetrennt und entfernt werden (vgl. Fig. 1e). Alsdann werden die Kegelstifte aus den Gleitplatten 15 entfernt und die Kolben der Haupthubeinrichtung 16 eingefahren. Dabei ziehen sich die Zylinder selbständig nach. Die Kegelstifte werden im nächsten Loch wieder eingesteckt, so dass die Haupthubvorrichtung 16 erneut am Schlitten 10 fixiert ist. Die Kegelstifte finden hier passende Löcher, da der Bohrungsabstand dem Hubweg entspricht. Sodann wird der nächste Hub mit der Haupthubeinrichtung 16 gefahren, womit das Bündel 2 um den Hubweg in das Außengehäuse tiefer eintaucht. Am anderen Ende des Gehäuses 1 kommt dadurch die nächste Sektion 6 frei und wird entfernt. Durch das Entfernen der Sektionen nach jedem Hub wird verhindert, dass der Schachtelhalm 5 mit der benachbarten Antriebsmaschine 3 kollidiert.

Dieser Vorgang wird solange wiederholt, bis sich das Bündel 2 kurz vor dem Passungsbereich befindet. Durch die Spindeln des Lagers 19 hat man die Möglichkeit, das Bündel 2 mit der letzten Schachtelhalmsektion horizontal und vertikal auszurichten, um sauber in den Passungsbereich des Gehäuses (häufig H7/g6) zu gelangen. Dazu sollten im Passungsbereich möglichst Schrägen vorgesehen sein.

Abschließend wird die letzte Schachtelhalmsektion demontiert, das Bündel im Gehäuse ausgerichtet und fixiert. Die Laufkatze 4 wird zuvor entfernt, das Lager 19 und die Montageeinrichtung 4, 10, 8, 7 werden ebenfalls entfernt. Nun kann das Gehäuse 1 an der noch offenen Seite mit einem Deckel verschlossen werden.

Für eine spätere Demontage ist es denkbar, an der in Montagerichtung gewandten Stirnseite des Bündels 2 kleine Schubzylinder vorzusehen, die das Bündel 2 aus dem Passungsbereich des Gehäuses 1 herausdrücken können. Das Bündel 2 kann dann in umgekehrter Reihenfolge entnommen werden und während der Revision auf der Montagevorrichtung und dem Lager 19 gestützt verbleiben.

Figur 3 zeigt eine Sektion 6 des Schachtelhalms 5 perspektivisch. Die Sektionen 6 entsprechen zylindrischen Rohrabschnitten. Sie weisen oberseitig eine Öse 20 zum Abtransport via Kran 17 auf, unten sind sie mit einer Gleitfläche 6a versehen, die auf dem Lager 19 abrollt oder gleitet. Die Sektionen werden durch Zusammenstecken einer stirnseitigen Zentrierung zueinander ausgerichtet und über Flansche 21 miteinander verschraubt. Die Flasche 21 definieren folglich die Stoßstellen.

## Patentansprüche

1. Verfahren zur Montage einer Turbomaschine, insbesondere eines Topfverdichters, bei dem ein Bündel (2) Bauteile der Turbomaschine koaxial in ein Außengehäuse (1) der Turbomaschine eingeführt wird und bei dem eine an dem Außengehäuse (1) festgesetzte Montagevorrichtung verwendet wird, auf welcher sich das Bündel (2) während der Montage zumindest zeitweilig abstützt,
**dadurch gekennzeichnet, dass**
das Bündel (2) an seiner in Einführrichtung gewandten Stirnseite mit einer Verlängerung (5) versehen wird, welche sich unmittelbar vor Einführen des Bündels (2) längs durch das Außengehäuse (1) hindurch erstreckt und in einem Lager (19) aufliegt, welches an der der Montagevorrichtung abgewandten Stirnseite des Außengehäuses (1) angeordnet und an dem Außengehäuse (1) festgesetzt ist,
wobei die Verlängerung (5) aus einer Mehrzahl von hintereinander aufgereihten und in Stoßstellen aneinander lösbar befestigten Sektionen (6) gebildet wird,
wobei das Bündel (2) durch eine Mehrzahl von aufeinander folgenden, von der Montagevorrichtung ausgeübten Hüben in das Außengehäuse (1) schrittweise eingeführt wird, und
wobei die Verlängerung (5) sukzessive vom Bündel (2) abgebaut wird, indem ihre außerhalb des Lagers (19) liegenden Stoßstellen nacheinander getrennt und die abgetrennten Sektionen (6) entfernt werden.

2. Verfahren nach Anspruch 1,
**dadurch gekennzeichnet, dass**
es sich bei der Verlängerung um einen Schachtelhalm (5) handelt, der sich aus mehreren ineinander gesteckten, im Wesentlichen zylinderrohrförmigen Sektionen (6) zusammensetzt und sich koaxial zum Bündel (2) erstreckt.

3. Verfahren nach Anspruch 1 oder 2,
**dadurch gekennzeichnet, dass**
nach jedem Hub eine Stoßstelle getrennt und eine **dadurch** abgetrennte Sektion (6) entfernt wird.

4. Verfahren nach Anspruch 1, 2 oder 3,
**dadurch gekennzeichnet, dass**
die Montagevorrichtung die Hübe mittels einer Haupthubeinrichtung (16) bewerkstelligt, die nach jedem erfolgten Hub entgegengesetzt eingefahren wird.

5. Verfahren nach einem der Ansprüche 1 bis 4,
**dadurch gekennzeichnet, dass**
durch vertikale und/oder horizontale Lagevariation des Lagers (19) das Bündel (2) koaxial zum Außengehäuse (1) ausgerichtet wird.

6. Montagevorrichtung,
bestimmt für die Verwendung in einem Verfahren nach einem der Ansprüche 1 bis 5.

7. Montagevorrichtung nach Anspruch 6,
**gekennzeichnet durch**
ein am Außengehäuse (1) festsetzbares Gestell (8),
einen im Gestell (8) linear geführten Schlitten (10),
eine Vorhubeinrichtung (11) zum Verschieben des Schlittens (10) relativ zum Gestell (8),
eine im Schlitten (10) linear geführte, an dem Bündel (2) festsetzbare Laufkatze (4),
eine Haupthubeinrichtung (16) zum Verschieben der Laufkatze (4) relativ zum Schlitten (10) und
eine am Schlitten (10) angeordnete, vertikal verfahrbare Abstützeinrichtung (12),
wobei die Montageeinrichtung so dimensioniert ist, dass sie das einerseits auf der Laufkatze (4) und andererseits auf der Abstützeinrichtung (12) lastende Bündel (2) zu tragen vermag.

8. Montagevorrichtung nach Anspruch 7,
**dadurch gekennzeichnet, dass**
die Haupthubeinrichtung (16) mindestens einen Hydraulikzylinder umfasst, der mit seinem ersten Ende an der Laufkatze
(4) angebunden ist und mit seinem zweiten Ende mit auf dem Schlitten (10) gleitenden Gleitplatten (15) versehen ist, und
dass entlang des Schlittens (10) eine Mehrzahl von Bohrungen beabstandet zueinander angeordnet sind,
wobei der Abstand der Bohrungen längs des Schlittens (10) im Wesentlichen dem Hub der Haupthubeinrichtung (16) entspricht, und
wobei die Gleitplatten (15) mittels in die Bohrungen einsteckbaren Stiften an dem Schlitten (10) fixierbar sind.
